# EUROPEAN PATENT APPLICATION

(11) **EP 4 089 894 A1**
(43) Date of publication of application: **16.11.2022**
(21) Application number: 21859327.5
(22) Date of filing: 26.03.2021
(51) Int. Cl.: H02K 21/26, H02K 7/18, H02K 11/042

(54) **CIRCUIT BOARD AND POWER SUPPLY DEVICE**

(71) Applicant: Pacific Industrial Co., Ltd., Ogaki-shi, Gifu 503-8603 (JP)
(72) Inventor:
(74) Representative: Kramer Barske Schmidtchen Patentanwälte PartG mbB
(86) International application number: PCT/JP2021/013005
(87) International publication number: WO 2022/201523

(57) **Abstract**

An object is to provide a technique for improving the durability of a circuit board attached to a rotating body and a device that includes same.

A circuit board 50 according to the embodiment is fixed to a rotating body, and oriented such that its plate thickness direction is parallel to the rotation axis of the rotating body. The circuit board 50 includes either a plurality of devices mounted thereon such as to be distributed around the rotation axis so that the circuit board 50 as a whole has a center of gravity located in a central area of rotation, or a single device mounted thereon in an annular shape such as to have a center coinciding with the rotation axis.

## Description

### TECHNICAL FIELD

The present disclosure relates to a circuit board attached to a rotating body and a power supply device.

### BACKGROUND ART

A circuit board of this type, which is attached for example to a tire wheel, is known (see, for example, Patent Document 1).

### PATENT DOCUMENTS

Patent Document 1: JP 2000-278923 A (paragraph [0022] and Fig. 2)

### SUMMARY OF THE INVENTION

### PROBLEMS TO BE SOLVED BY THE INVENTION

Durability is sometimes an issue with a circuit board attached to a rotating body or a device that contains the circuit board such as the example described above because of the centrifugal force of rotation they are subjected to. The present disclosure provides a technique for improving the durability of a circuit board attached to a rotating body and a device that includes same.

### MEANS OF SOLVING THE PROBLEMS

The circuit board according to the present disclosure made to solve the above problem is a circuit board fixed to a rotating body, with a plate thickness direction oriented parallel to a rotation axis, including either a plurality of devices mounted on the circuit board to be distributed around the rotation axis so that the circuit board as a whole has a center of gravity located in a central area of rotation, or a single device mounted on the circuit board in an annular shape to have a center coinciding with the rotation axis.

### BRIEF DESCRIPTION OF THE DRAWINGS

Fig. 1 is a perspective view of a vehicle according to a first embodiment of the present disclosure.
Fig. 2 is a cross-sectional side view of a power supply device.
Fig. 3 is an exploded perspective view of the power supply device.
Fig. 4 is an exploded perspective view of the power supply device.
Fig. 5 (A) is a front view of the circuit board and (B) is a rear view of the circuit board.
Fig. 6 is a circuit diagram of the power supply device and a load.
Fig. 7 is a conceptual diagram explaining a connection between the power supply device and a tire monitoring device.
Fig. 8 is a perspective view of a circuit board of a power supply device and a generator according to a second embodiment.
Fig. 9 is a perspective view of a circuit board of a power supply device and a generator according to a variation example.

### MODE FOR CARRYING OUT THE INVENTION

### (First embodiment)

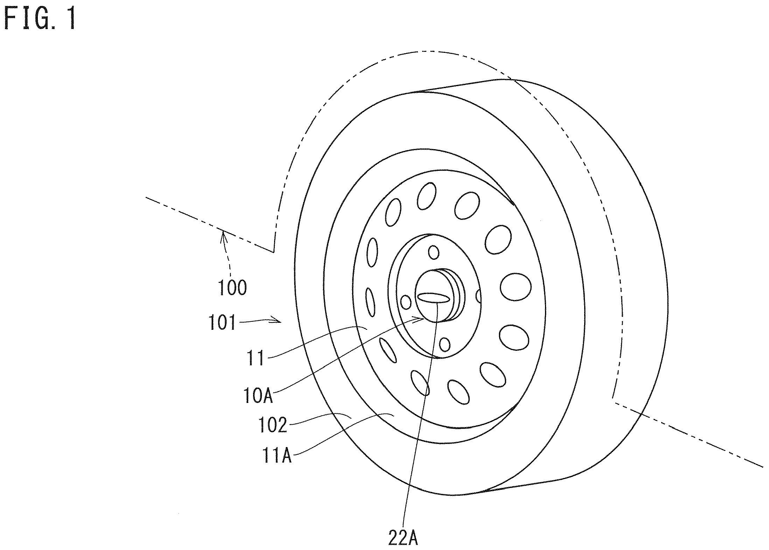

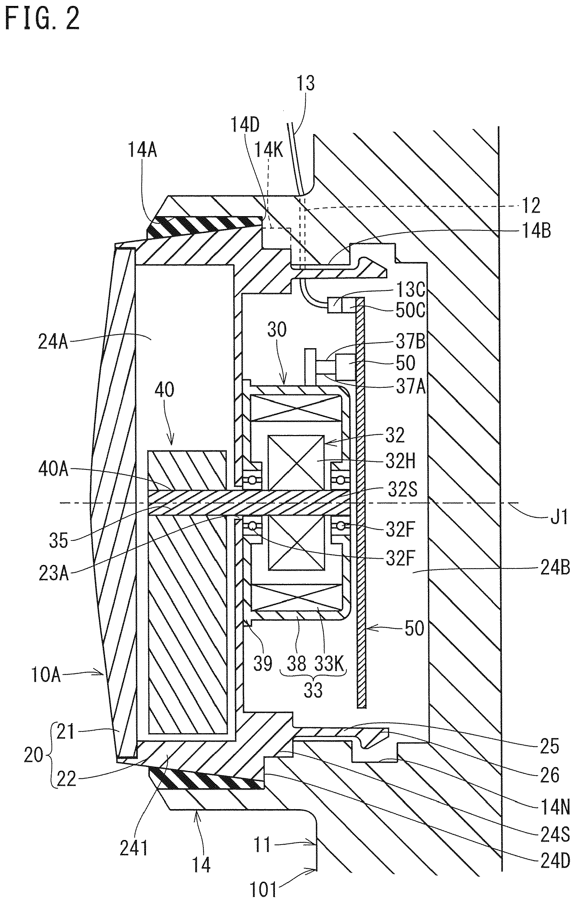

A power supply device 10A according to a first embodiment of the present disclosure will be described with reference to Fig. 1 to Fig. 7. This power supply device 10A is attached to a central part of each wheel 101 of a vehicle 100, as shown in Fig. 1. In the central part of the tire wheel 11 of each wheel 101 is provided a circular recess 14 that is open at the outer end and closed at the inner end as shown in Fig. 2 for attaching the power supply device 10A. The circular recess 14 has a step inside at the open end where the diameter is increased to provide a large-diameter part 14A. A small-diameter part 14B on the inner side from a step surface 14D is formed with locking grooves 14N for locking protrusions 26 to be described later of the power supply device 10A to engage with. The step surface 14D is formed with a plurality of engaging recesses 14K for anti-rotation protrusions 27 to be described later of the power supply device 10A to fit in and engage with.

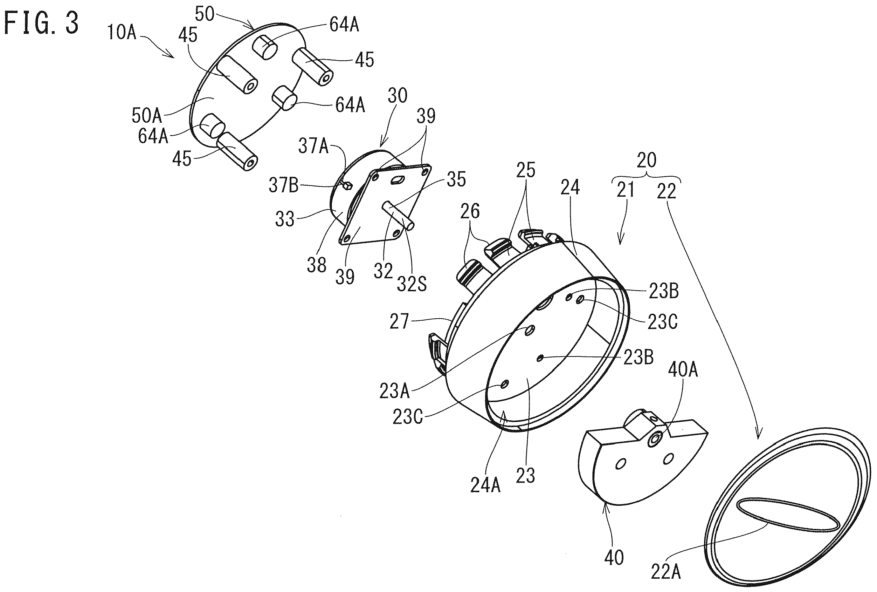

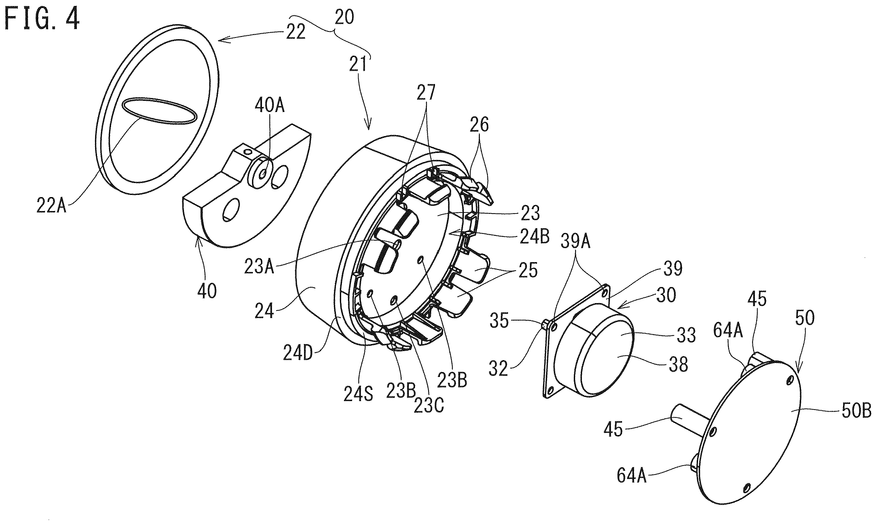

As shown in Fig. 3 and Fig. 4, the power supply device 10A is structured as a unit in which a generator 30 and a circuit board 50 are attached to a housing 20. The housing 20 is made of resin, for example, and has a separate housing body 21 and a lid member 22. The housing body 21 includes a flat, substantially cylindrical tubular wall 24 that is small in axial length compared to its outside diameter, and positioned such that its center axis coincides with the rotation axis J1 (see Fig. 2) of the tire wheel 11 (which corresponds to the "rotating body" of the present disclosure). Hereinafter the directions parallel to the rotation axis J1 of the power supply device 10A shall be referred to as "front to back direction."

The interior of the tubular wall 24 is divided into two, first chamber 24A on the front side and second chamber 24B on the rear side, by a partition wall 23 provided at a midway point in the front to back direction. The lid member 22 closes the opening at the front end of the tubular wall 24, so that the first chamber 24A is a tubular compartment closed at both ends. The lid member 22 and the tubular wall 24 are processed to be water-proof. The lid member 22 further has an emblem 22A formed on the outer face.

While the tubular wall 24 of this embodiment is provided with the first chamber 24A and second chamber 24B, the tubular wall 24 may instead include only the first chamber 24A, with the partition wall 23 provided at the rear end, or the tubular wall 24 may be divided in the axial direction into three chambers.

The tubular wall 24 is formed with a step surface 24D on the outer face near the rear end, and a small-diameter part 24S on the rear side of the step surface 24D. A plurality of locking lugs 25 protrudes from the rear surface of the tubular wall 24, slightly inside of the outer face. These locking lugs 25 are configured to extend backward in a cantilevered manner and have a locking protrusion 26 at the tip. A plurality of anti-rotation protrusions 27 protrudes from an outer edge portion on the rear surface of the tubular wall 24. The plurality of locking lugs 25 and the plurality of anti-rotation protrusions 27 are circumferentially distributed around the tubular wall 24 so that the center of gravity of the entire housing 20 lies on the center axis of the tubular wall 24.

The generator 30 is attached to the rear surface of the partition wall 23 and accommodated in the second chamber 24B. The generator 30 has the same structure as an AC motor, for example, and outputs an alternating current. Specifically, the generator 30 is accommodated substantially entirely in a flat cylindrical case 38 with a quadrate flange 39 at one end. As shown in Fig. 2, the stator 33 of the generator 30 is made up of the cylindrical case 38 and a cylindrical stator field coil 33K fixed on the inner side face of the cylindrical case. The rotor 32 of the generator 30 on the other hand includes a rotor body 32H accommodated in a central space inside the stator 33, and a rotating shaft 32S extending through a central part of the rotor body 32H. The rotating shaft 32S is rotatably supported by a pair of bearings 32F fixed at both ends of the cylindrical case 38. One end of the rotating shaft 32S extends out of the cylindrical case 38 from a central part of the flange 39 and forms a rotation input part 35. A pair of, for example pin-shaped, output electrodes 37A and 37B protrude rearward from a side face of the generator 30, and the generated alternating current is output across these output electrodes 37A and 37B.

While the generator 30 of this embodiment includes a pair of output electrodes 37A and 37B to output the alternating current, the generator may include three output electrodes, for example, to generate a 3-phase alternating current. The generator 30 may have the same structure as a DC motor and output a direct current.

The partition wall 23 is formed with a through hole 23A in a central part for attaching the generator 30, and a plurality of screw holes 23B therearound. The front end face of the generator 30 on a side the flange 39 is overlapped with the rear surface of the partition wall 23 (i.e., outer face at one end of the first chamber 24A), and screws having passed through the through holes 39A at four corners of the flange 39 are fastened into the screw holes 23B of the partition wall 23 to secure the generator. The rotation input part 35 extends through the through hole 23A in the partition wall 23 and protrudes into the first chamber 24A (see Fig. 2).

Inside the first chamber 24A, an inertial component 40 is fixedly attached to the rotation input part 35. The inertial component 40 is a metal circular plate, for example, having a slightly smaller outside diameter than the inside diameter of the first chamber 24A, and cut into a form slightly smaller than a semicircle as a whole except for the central part. The rotation input part 35 is tightly fitted into a through hole 40A extending through the remaining central part so that the inertial component 40 and rotor 32 rotate integrally relative to the stator 33.

The inertial component 40 is not limited to the shape described above; as long as it has the center of gravity shifted off the rotation axis J1, the inertial component may have any shape and may be made of any material.

The circuit board 50 is disposed behind the generator 30. A plurality of support pillars 45 protrudes rearward from the partition wall 23 for supporting this circuit board 50. Specifically, the support pillars 45 have a columnar structure, with screw holes in the center at both ends. Along the outer edge of the partition wall 23, a plurality of through holes 23C is formed at (e.g., 3) equidistant positions along an imaginary circle around the through hole 23A. The plurality of support pillars 45 is secured to the partition wall 23 by screws having passed through respective through holes 23C from the first chamber 24A side, and extend rearward beyond the rear surface of the generator 30.

The circuit board 50 is in the form of a circular plate, placed over the rear faces of the plurality of support pillars 45, and fastened with screws at the plurality of points along the outer edge of the circuit substate 50. The rotation axis J1 extends perpendicularly to the center of the circuit board 50. Between the rear surface of the generator 30 and the circuit board 50 is provided a slight clearance (see Fig. 2).

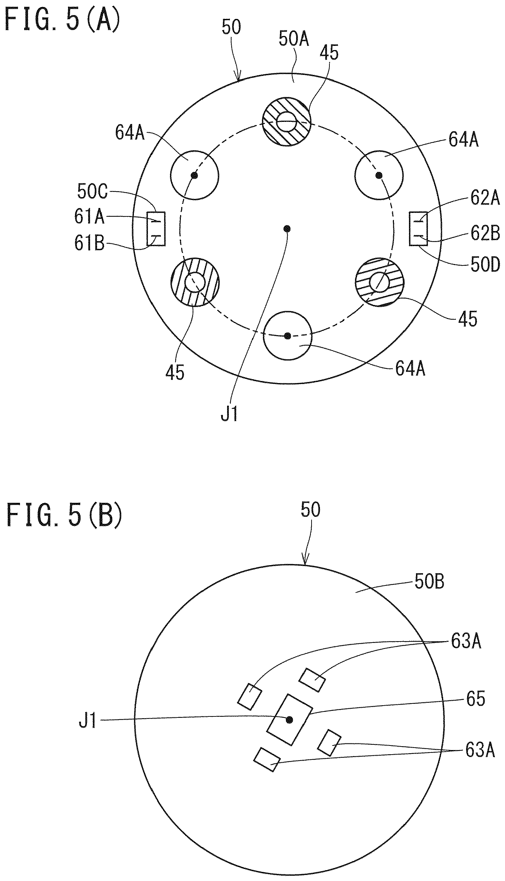

A rectifier circuit 60 is mounted on the circuit board 50 for converting the alternating current output by the generator 30 into a direct current. As shown in Fig. 5(A), the rectifier circuit 60 includes a pair of input electrodes 61A and 61B which are connected to the output electrodes 37A and 37B of the generator 30, and a pair of output electrodes 62A and 62B connected to a load. The pair of input electrodes 61A and 61B are provided as terminal fittings inside a connector 50C fixed in an outer edge portion on a front face 50A of the circuit board 50. The pair of output electrodes 37A and 37B of the generator 30 are inserted in the connector 50C and connected to the pair of input electrodes 61A and 61B. The pair of output electrodes 62A and 62B are provided as terminal fittings inside a connector 50D fixed in an outer edge portion on the front face 50A of the circuit board 50, and connected to a load to be described later.

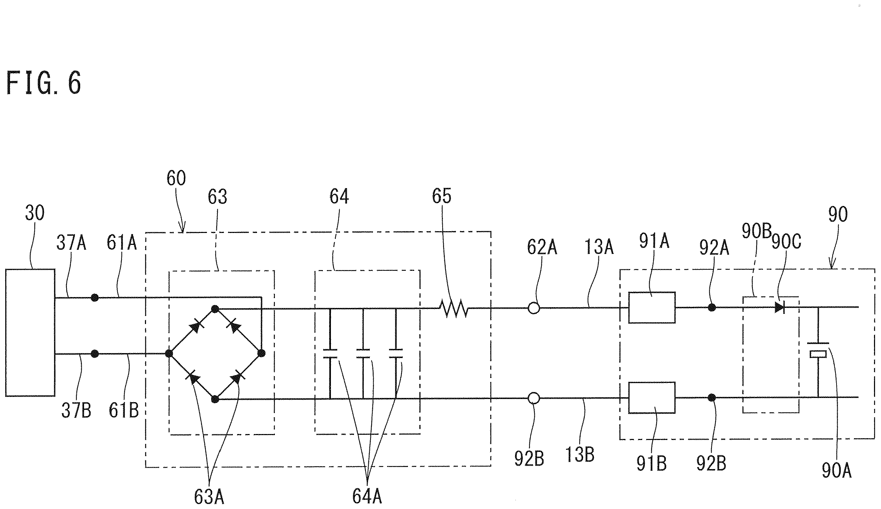

The rectifier circuit 60 converts the alternating current applied to the input electrodes 61A and 61B to a pulsating current by a diode circuit 63, smoothes the pulsating current by a smoothing circuit 64, and outputs the current across the pair of output electrodes 62A and 62B. The diode circuit 63 is a common bridge circuit having, four diodes 63A, for example as shown in Fig. 6. The smoothing circuit 64 is a plurality of smoothing capacitors 64A connected in parallel between the pair of output electrodes 62A and 62B of the rectifier circuit 60. Additionally, a resistor 65 is connected as an element to reduce the current between the smoothing circuit 64 and one output electrode 62A.

As described above, the smoothing circuit 64 of this embodiment has a plurality of parallel-connected smoothing capacitors 64A between the pair of output electrodes 62A and 62B. Typically, however, one smoothing capacitor having an electrostatic capacity that equals to that of the plurality of smoothing capacitors 64A combined is connected between the pair of output electrodes 62A and 62B. This is because it is generally more advantageous to provide a single smoothing capacitor 64A than several divided smoothing capacitors 64A in terms of installation space, total mass, cost, and wiring simplicity. Even so, this embodiment uses a plurality of smoothing capacitors 64A for the smoothing circuit 64 in consideration of the fact that the circuit board 50 rotates with the tire wheel 11. These smoothing capacitors 64A have the same mass, and mounted on the front face 50A of the circuit board 50 such that their respective centers of gravity are located at positions equally dividing a common imaginary circle around the rotation axis J1 of the generator 30, as shown in Fig. 5(A). Therefore, the center of gravity of the circuit board 50 as a whole is located near the rotation axis J1 (i.e., central part of the circuit board 50).

The positions of the plurality of diodes 63A and resistor 65 are also taken into account in order to make the center of gravity of the entire circuit board 50 closer to the rotation axis J1. Specifically, the plurality of diodes 63A included in the diode circuit 63 has the same mass similarly to the plurality of smoothing capacitors 64A, and is mounted on the rear side 50B of the circuit board 50 such that their respective centers of gravity are located at positions equally dividing a common imaginary circle around the rotation axis J1 of the generator 30. The resistor 65 is mounted in a central part on the rear side 50B of the circuit board 50 so that its center of gravity is located at the center of the circuit board 50. Accordingly, as described above, the center of gravity of the circuit board 50 as a whole is located in the central part.

A central part of the circuit board 50 shall refer to a range of a circle around the rotation axis J1 having 10% of surface area of either one of the front and rear side of the circuit board 50.

The diode circuit 63 in the rectifier circuit 60 is not limited to the plurality of diodes 63A that forms a bridge connection as described above. Namely, the rectifier circuit 60 is not limited to a bridge rectifier circuit and may have any configuration. Specifically, the rectifier circuit 60 may be, for example, a half wave rectifier circuit that is configured with only a single diode and uses only half cycle of alternating current, or a full wave or full wave voltage doubler rectifier circuit configured with a transformer and a pair of diodes. The circumferentially equally distributed configuration mentioned in the above description includes any arrangement that is not necessarily equally spaced but can counterbalance the centrifugal force, such as for example a line symmetric arrangement.

The housing 20 is fixed to the tire wheel 11 as described below. The plurality of anti-rotation protrusions 27 of the housing 20 and the plurality of engaging recesses 14K of the tire wheel 11 (see Fig. 2) are brought to face each other, and the housing 20 is pushed into the circular recess 14 of the tire wheel 11 to insert the plurality of locking lugs 25. This causes the plurality of locking lugs 25 to bend inward and closer to the center to allow the plurality of anti-rotation protrusions 27 to engage with the plurality of engaging recesses 14K. At the point where the step surface 24D of the housing 20 abuts on the step surface 14D of the circular recess 14, the plurality of locking lugs 25 elastically returns so that the locking protrusions 26 latch in the locking grooves 14N of the tire wheel 11. This way, the housing 20 is fixed to the tire wheel 11 such as to be integrally rotatable. Sealant is applied between the inner side face of the tubular wall 24 of the housing 20 and the inner side face of the circular recess 14 so that the space on the inner side of the step surface 14D of the circular recess 14 is sealed water tight, which makes the second chamber 24B a water-proof space.

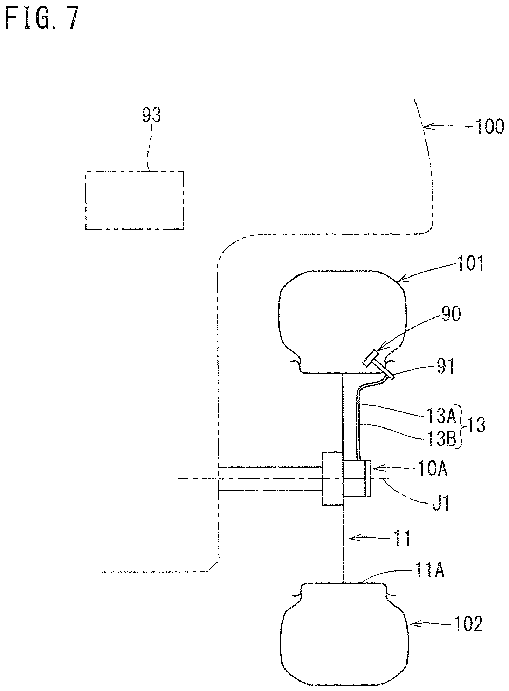

The electrical load connected to the power supply device 10A of this embodiment is a tire monitoring device 90 provided to the wheel 101 as shown in Fig. 7. The tire monitoring device 90 is provided at one end of a tire valve 91 fixed to the rim 11A of the tire wheel 11 and positioned inside the tire 102. The tire monitoring device detects the pressure and temperature inside the tire 102 and wirelessly transmits the detection results to a signal processor 93 mounted on the main body of the vehicle 100. As shown in Fig. 6, the tire monitoring device 90 is provided with a rechargeable battery 90A as a power source, as well as a charging circuit 90B for charging the rechargeable battery 90A. A pair of input electrodes 92A and 92B of this charging circuit 90B are connected to two components of the tire valve 91 and wired out of the tire 102.

Specifically, the tire valve 91 has a valve stem 91A which is fixed in a state such as to extend through the rim 11A, and a valve shaft 91B which moves linearly inside this valve stem 91A, insulated from each other. These valve stem 91A and valve shaft 91B are connected to the pair of input electrodes 92A and 92B of the charging circuit 90B described above inside the tire 102, and connected to a pair of core wires 13A and 13B of a cable 13 outside the tire 102.

The cable 13 is laid along a radial direction of the tire wheel 11 and secured on an outer face of the tire wheel 11. As shown in Fig. 2, the tire wheel 11 is formed with a communication hole 12 that connects the inner part of the circular recess 14 on the inner side of the step surface 14D and the outer face of the tire wheel 11 lateral to the circular recess 14. The cable 13 is passed through the communication hole 12, with a connector 13C provided to the end of the cable 13 inside the circular recess 14. The communication hole 12 is filled with sealant to be water-proof. The connector 13C of the cable 13 is coupled to the connector 50D mentioned above of the circuit board 50 so that power can be supplied from the power supply device 10A to the tire monitoring device 90.

The structure of the power supply device 10A according to this embodiment is as has been described above. This power supply device 10A does not operate and does not generate power when the vehicle 100 is stopped. The charging circuit 90B of the tire monitoring device 90 that is the load is provided with a diode 90C so that no power is supplied from the rechargeable battery 90A of the tire monitoring device 90 to the power supply device 10A.

When the vehicle 100 runs, the stator 33 of the generator 30 fixed to the tire wheel 11 of the wheel 101 rotates with the tire wheel 11 relative to the road surface, while the rotor 32 of the generator 30 rotates relative to the stator 33, because the self weight of the inertial component 40 restricts rotation of the rotor 32 relative to the road surface. Thus the power supply device 10A of this embodiment can generate power by utilizing rotation of the tire wheel 11 to cause the rotor 32 to rotate relative to the stator 33 of the generator 30. The generated alternating current is rectified by the rectifier circuit 60 and can be supplied to the tire monitoring device 90 serving as the load. When the rechargeable battery 90A of the tire monitoring device 90 has little remaining power, the battery is charged.

The durability of the circuit board 50 of the power supply device 10A is an issue because the circuit board is subjected to the centrifugal force when the tire wheel 11 rotates. In this regard, the power supply device 10A of this embodiment has a plurality of devices including the plurality of smoothing capacitors 64A distributed around the rotation axis J1 such that the center of gravity of the circuit board 50 as a whole is located in a central area of rotation, because of which the circuit board 50 undergoes less vibration resulting from the centrifugal force. Typically, a single smoothing capacitor is used, rather than a plurality of smoothing capacitors 64A. Here, a plurality of smoothing capacitors 64A being electrically equivalent is used, and distributed around the rotation axis J1, which facilitates the arrangement of the center of gravity of the entire circuit board 50 in a central area of rotation. The use of the plurality of smoothing capacitors 64A makes each of the smoothing capacitors 64A more lightweight, which reduces the centrifugal force applied to each smoothing capacitor 64A and in turn reduces the load which the support part of each smoothing capacitor 64A on the circuit board 50 must carry. These all contribute to better durability of the circuit board 50 and therefore improves the durability of the power supply device 10A equipped with the circuit board 50.

The circuit board 50 is disposed opposite to the first chamber 24A, with the stator 33 of the generator 30 interposed therebetween. The plurality of smoothing capacitors 64A mounted on the circuit board 50 is disposed laterally to the stator 33. This efficient use of the space lateral to the stator 33 allows the power supply device 10A to be more compact along the direction of the rotation axis J1.

While the circuit board 50 may be fixed to the generator 30, the circuit board 50 in the power supply device 10A of this embodiment is fixed to the housing 20 by a plurality of support pillars 45 rather than to the generator 30. As a result, the circuit board 50 can be fixed more stably, and this contributes to a better durability, too.

The power supply device 10A of this embodiment includes the housing 20 that is fixed to the tire wheel 11. The inertial component 40 is disposed inside the tubular first chamber 24A, which is closed at both ends, of this housing 20. Therefore entrance of foreign substances into the moving area of the inertial component 40 is prevented reliably.

The tire monitoring device 90 is typically driven only by a battery. In this embodiment, the power supply device 10A that generates power as the vehicle 100 runs supplies power to the tire monitoring device 90. Therefore, compared to a case where the tire monitoring device 90 is driven only by a battery, more power is available for the tire monitoring device 90, which enables sophistication of the tire monitoring device 90.

### (Second embodiment)

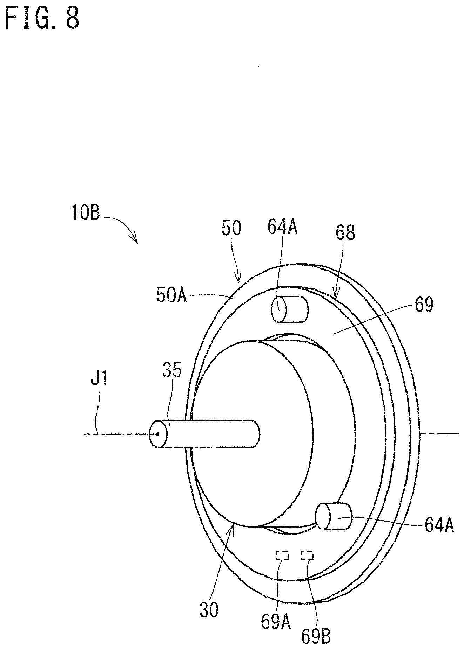

The power supply device 10B of this embodiment is shown in Fig. 8, and different in that a plurality of smoothing capacitors 64A of the smoothing circuit 64 is mounted on the circuit board 50 as a single device unit 68. Specifically, the device unit 68 has an annular insulating ring member 69, with the plurality of smoothing capacitors 64A fixed at several circumferentially equally spaced positions. The plurality of smoothing capacitors 64A is connected in parallel between a pair of connection terminals 69A and 69B fixed to the ring member 69. Namely, the device unit 68 is substantially a single capacitor having an annular shape as a whole. The device unit 68 is screwed to the front face 50A of the circuit board 50 with an insulating spacer (not shown) therebetween such that its center axis coincides with the rotation axis J1 of the tire wheel 11. The pair of connection terminals 69A and 69B of the device unit 68 are connected between the pair of output electrodes 62A and 62B of the rectifier circuit 60 described in the first embodiment.

In addition to the similar effects of the power supply device 10A of the first embodiment, the power supply device 10B of this embodiment facilitates mounting of the plurality of smoothing capacitors 64A onto the circuit board 50 because the plurality of smoothing capacitors 64A is mounted as a device unit 68 on the circuit board 50, in which the smoothing capacitors 64A are connected in parallel between the pair of connection terminals 69A and 69B and fixed on the ring member 69. The ring member 69 receives and balances the centrifugal force applied to the plurality of smoothing capacitors 64A and reduces the load on the circuit board 50 resulting from the centrifugal force, so that the durability of the circuit board 50 is improved.

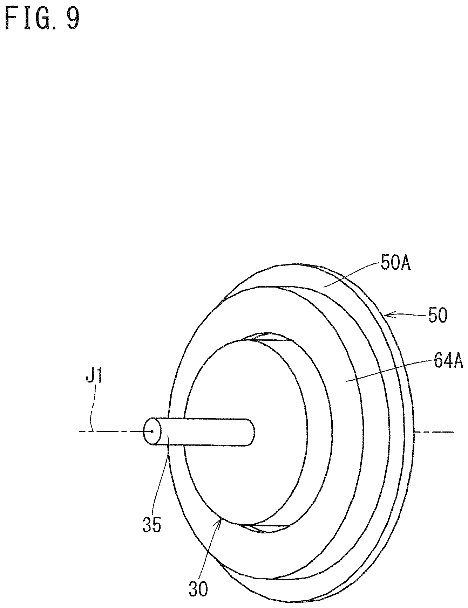

The ring member 69 may be an annular case, or an annular circuit board. In the case with an annular case, the case may be filled with a potting material to fix the plurality of smoothing capacitors 64A. Alternatively, instead of the device unit 68, a single annular smoothing capacitor 64A may be specially produced and mounted on the circuit board 50 as shown in Fig. 9.

### (Other embodiments)

(1) While the load connected to the power supply device 10A of the first embodiment is a tire monitoring device 90, the load is not limited to the tire monitoring device 90. For example, the load connected to the power supply device 10A may be a light-emitting device for decorative lighting of the tire wheel 11.
(2) While the power supply device 10A of the first embodiment is equipped with a rechargeable battery as a load, the power supply device 10A itself may include a rechargeable battery. The power supply device 10A can then supply power to the load even during the time when the vehicle 100 is stopped.
(3) In the embodiments described above, examples were shown in which the circuit board 50 was provided to a power supply device 10A or 10B. Instead, the circuit board may be fixed to other rotating bodies other than a power supply device, and may "include a plurality of devices mounted thereon such as to be distributed around the rotation axis so that the circuit board as a whole has a center of gravity located in a central area of rotation, or, a single device mounted thereon in an annular shape such as to have a center coinciding with the rotation axis." The circuit mounted on the circuit board is not limited to a rectifier circuit, and the device is not limited to a smoothing capacitor. Specifically, the circuit board may include a divider circuit mounted thereon, with a plurality of resistors that are devices included in this divider circuit distributed around the rotation center. In a configuration where the generator has a similar structure as that of a DC motor and generates a direct current, and where a rotating board has an inverter circuit mounted thereon, a plurality of FETs included in the inverter circuit may be distributed around the rotation center.
(4) While the second embodiment described above utilizes the device unit 68 as a smoothing capacitor, such a unit may be used not only as a smoothing capacitor but also for other capacitors for other purposes. The plurality of devices on the device unit and their connection structure may be changed as required. Specifically, a device unit having a plurality of resistors connected in series and fixed on a ring member, or a device unit having a plurality of switches connected in parallel and fixed on a ring member, may be used.

While specific examples of the techniques included in the claims are disclosed in the specification and drawings, the techniques set forth in the claims are not limited to these specific examples but rather include various modifications and alterations of the specific examples, as well as partial extracts from the specific examples.

### DESCRIPTION OF THE REFERENCE NUMERAL

- 10A, 10B: Power supply device
- 11: Tire wheel
- 20: Housing
- 24: Tubular wall
- 24A: First chamber
- 30: Generator
- 32: Rotor
- 32H: Rotor body
- 32S: Rotating shaft
- 33: Stator
- 35: Rotation input part
- 40: Inertial component
- 45: Support pillar
- 50: Circuit board
- 60: Rectifier circuit
- 64A: Smoothing capacitor
- 68: Device unit
- 69: Ring member
- 69A, 69B: Connection terminal
- 90: Tire monitoring device

## Claims

1. A circuit board fixed to a rotating body, with a plate thickness direction oriented parallel to a rotation axis,
comprising either a plurality of devices mounted on the circuit board to be distributed around the rotation axis, or a single device mounted on the circuit board in an annular shape to have a center coinciding with the rotation axis, so that the circuit board as a whole has a center of gravity located in a central area of rotation.

2. The circuit board according to claim 1, wherein the plurality of devices includes a plurality of identical devices that is positioned on a common imaginary circle around the rotation axis and connected in parallel or in series in a circuit mounted on the circuit board.

3. The circuit board according to claim 2, comprising a device unit mounted on the circuit board, wherein the device unit has a ring member on which the plurality of devices is fixed, in a state in which the plurality of devices is connected in parallel or in series between a pair of connection terminals.

4. The circuit board according to claim 2 or 3, comprising a rectifier circuit mounted on the circuit board, wherein
the plurality of identical devices positioned on the imaginary circle includes a plurality of identical smoothing capacitors connected in parallel in the rectifier circuit.

5. The circuit board according to claim 1, comprising a rectifier circuit mounted on the circuit board, wherein the rectifier circuit includes a smoothing capacitor in an annular shape having a center coinciding with the rotation axis.

6. A power supply device comprising:
the circuit board according to claim 4 or 5 fixed to a tire wheel that is the rotating body, perpendicularly to the rotation axis of the tire wheel;
a generator attached to the tire wheel and connected to a load via the rectifier circuit of the circuit board;
a stator included in the generator, fixed to the tire wheel, and having a circuit connected to the rectifier circuit;
a rotor included in the generator and positioned on the rotation axis of the tire wheel; and
an inertial component fixed to the rotor and configured to maintain a consistent attitude by an own weight of the inertial component.

7. The power supply device according to claim 6, further comprising a housing including a tubular first chamber having a center axis coinciding with the rotation axis and closed at both ends, the housing being fixed to the tire wheel, wherein
the stator has one end face in contact with and fixed to an outer surface at one end of the first chamber,
the rotor includes a rotor body accommodated inside the stator and a rotation input shaft protruding from the one end face of the stator and passing through between inside and outside of the first chamber,
the inertial component is secured to the rotation input shaft and rotatably accommodated in the first chamber, and
the circuit board is disposed outside the first chamber.

8. The power supply device according to claim 6 or 7, wherein the circuit board is disposed opposite to the first chamber, with the stator interposed between the circuit board and the first chamber, and
the plurality of smoothing capacitors is disposed laterally to the stator.

9. The power supply device according to claim 8, further comprising a plurality of support pillars connecting the circuit board and an outer surface of the first chamber, each positioned between adjacent smoothing capacitors being lateral to the stator.

10. The power supply device according to any one of claims 6 to 9, wherein the load includes a tire monitoring device for monitoring a condition of a tire mounted to the tire wheel.

11. The power supply device according to any one of claims 6 to 10, wherein the load includes a rechargeable battery.

12. The power supply device according to any one of claims 6 to 11, wherein the load includes a light-emitting device for decorative lighting.
